# EUROPÄISCHE PATENTSCHRIFT

(11) **EP 1 366 535 B1**
(45) Veröffentlichungstag und Bekanntmachung des Hinweises auf die Patenterteilung: **06.10.2004**
(21) Anmeldenummer: 02722123.3
(22) Anmeldetag: 22.02.2002
(51) Int. Cl.: H01M 8/02

(54) **PLANARE UND IM WESENTLICHEN RECHTECKIGE BRENNSTOFFZELLE SOWIE BRENNSTOFFZELLENBLOCK**
PLANAR AND ESSENTIALLY RECTANGULAR FUEL CELL AND FUEL CELL BLOCK
PILE A COMBUSTIBLE PLANE ET SENSIBLEMENT RECTANGULAIRE, ET BLOC DE PILES A COMBUSTIBLE

(30) Priorität: 02.03.2001 EP 01105148
(43) Veröffentlichungstag der Anmeldung: 03.12.2003
(73) Patentinhaber: SIEMENS AKTIENGESELLSCHAFT, 80333 München (DE)
(72) Erfinder: ILLNER, Dieter, 91054 Erlangen (DE); LERSCH, Josef, 91336 Heroldsbach (DE); MATTEJAT, Arno, 91088 Bubenreuth (DE)
(86) Internationale Anmeldenummer: PCT/EP2002/001911
(87) Internationale Veröffentlichungsnummer: WO 2002/073724

(56) Entgegenhaltungen:
- EP-A- 0 591 800
- WO-A-01/45187
- US-A- 5 230 966
- PATENT ABSTRACTS OF JAPAN vol. 2000, no. 12, 3. Januar 2001 (2001-01-03) -& JP 2000 260439 A (NIPPON STEEL CORP), 22. September 2000 (2000-09-22)
- PATENT ABSTRACTS OF JAPAN vol. 1996, no. 09, 30. September 1996 (1996-09-30) -& JP 08 130028 A (FUJI ELECTRIC CO LTD), 21. Mai 1996 (1996-05-21)

## Beschreibung

Die Erfindung betrifft eine planare und im wesentlichen rechteckige Brennstoffzelle mit einem Kühlelement, das einen im wesentlichen rechteckigen Kühlmittelraum mit vier Eckregionen aufweist, wobei in einer ersten Eckregion die Mündung eines Kühlmittelzuflusses und in einer zweiten Eckregion die Mündung eines ersten Kühlmittelabflusses angeordnet ist. Außerdem betrifft die Erfindung einen Brennstoffzellenblock mit einer solchen Brennstoffzelle.

In einer Brennstoffzelle wird durch die Zusammenführung von Wasserstoff (H₂) und Sauerstoff (O₂) in einer elektrochemischen Reaktion elektrische Energie und Wärme erzeugt, wobei sich der Wasserstoff und der Sauerstoff zu Wasser (H₂O) verbinden. Eine einzelne Brennstoffzelle liefert eine Betriebsspannung von maximal 1,1 V. Daher wird eine Vielzahl von planaren Brennstoffzellen aufeinander gestapelt und zu einem Brennstoffzellenblock zusammengefasst. Durch das In-Reihe-Schalten der Brennstoffzellen des Brennstoffzellenblocks kann die Betriebsspannung des Brennstoffzellenblocks einige hundert Volt betragen. Eine Brennstoffzelle in einem Brennstoffzellenblock umfasst eine Membran-Elektroden-Einheit, die auch Elektrolyt-Elektroden-Einheit genannt wird, und die beidseitig davon benachbarte Verbundleiterplatte. Die Verbundleiterplatten können als Kühlelemente ausgestaltet sein.

Die technische Umsetzung des Prinzips der Brennstoffzelle hat zu unterschiedlichen Lösungen, und zwar mit verschiedenartigen Elektrolyten und Betriebstemperaturen zwischen 80 °C und 1000 °C geführt. In Abhängigkeit von ihrer Betriebstemperatur werden die Brennstoffzellen in Nieder-, Mittel- und Hochtemperatur-Brennstoffzellen unterteilt, die sich wiederum durch verschiedene technische Ausführungsformen voneinander unterscheiden.

Die in einer Brennstoffzelle durch die elektrochemische Reaktion entstehende Wärme muss aus der Brennstoffzelle abgeführt werden, damit die Brennstoffzelle nicht durch Überhitzung zerstört wird. Bei einer Niedertemperatur-Brennstoffzelle geschieht die Abfuhr dieser Wärme gewöhnlicherweise mit Hilfe eines Kühlmittelkreislaufs, wobei das Kühlmittel - in der Regel Wasser - die Brennstoffzelle durchströmt, dort Wärme aufnimmt und die Wärme außerhalb der Brennstoffzelle abgibt. Zu diesem Zweck umfasst die Brennstoffzelle ein Kühlelement, das wahlweise zum Kühlen der Brennstoffzelle oder auch zum Heizen der Brennstoffzelle, beispielsweise beim Anfahren des Brennstoffzellenblocks, verwendet werden kann. Das Kühlelement weist einen Kühlmittelraum auf, durch den das Mittel, in der Regel das Kühlwasser, während des Betriebs der Brennstoffzelle hindurchströmt. Der Kühlmittelraum weist einen Kühlmittelzufluss und einen Kühlmittelabfluss auf, wobei der Kühlmittelzufluss und der Kühlmittelabfluss so angeordnet sind, dass der vom Zufluss zum Abfluss strömende Kühlmittelstrom die Brennstoffzelle möglichst gleichmäßig kühlt.

In der EP 0 591 800 B1 ist ein aus zwei Platten zusammengesetztes Kühlelement offenbart, das einen rechteckigen Kühlmittelraum aufweist, wobei der Zufluss und der Abfluss für das Kühlmittel in einander diagonal entgegengesetzten Eckregionen des Kühlmittelraums angeordnet sind. Beim Durchströmen eines solchen Kühlmittelraum von Kühlwasser wird zwar der Mittelbereich des Kühlmittelraums effektiv gekühlt, die beiden nicht vom Zu- oder Abfluss benachbarten Eckregionen des Kühlmittelraums werden jedoch nur geringfügig vom Kühlwasser durchströmt. Dies führt dazu, dass die Brennstoffzelle in diesen Eckregionen stärker erhitzt wird als in ihrem mittleren Bereich, der an den mittleren Bereich des Kühlmittelraums angrenzt. Im Extremfall führt ein solcher mangelhafter Wärmeabtransport aus den schwach durchströmten Eckregionen zur Zerstörung der Elektrolyt-Membran der Brennstoffzelle an diesen Stellen.

Es ist daher die Aufgabe der vorliegenden Erfindung, eine Brennstoffzelle mit einem gegenüber dem Stand der Technik vergleichmäßigten Wärmeabtransport aus den am Kühlmittelraum anliegenden Elementen der Brennstoffzelle anzugeben. Außerdem ist es Aufgabe der vorliegenden Erfindung, einen Brennstoffzellenblock mit einer Brennstoffzelle mit einem solchen verbesserten Wärmeabtransport anzugeben.

Die erstgenannte Aufgabe wird durch eine Brennstoffzelle der eingangs genannten Art gelöst, die erfindungsgemäß einen zweiten Kühlmittelabfluss in einer dritten Eckregion des Kühlmittelraums aufweist, wobei der erste Kühlmittelabfluss an seiner engsten Stelle einen Strömungsquerschnitt Q₁ und der zweite Kühlmittelabfluss an seiner engsten Stelle einen Strömungsquerschnitt Q₂ aufweist und das Verhältnis Q₁/Q₂ 7 bis 25 beträgt.

Durch einen zweiten Kühlmittelabfluss in einer weiteren Eckregion wird eine verbesserte Durchströmung dieser ansonsten schwach durchströmten Eckregion erreicht. Hierdurch wird die Verweildauer des Kühlwassers in dieser Eckregion verringert, was dazu führt, dass es dort mehr Wärme aus den Wärme abgebenden Bauteilen der Brennstoffzelle aufnehmen kann und somit der Wärmeabtransport durch das Kühlwasser aus der Brennstoffzelle vergleichmäßigt wird. Das Kühlelement kann mit nur einem einzigen zweiten Kühlmittelabfluss in einer Eckregion oder auch mit zwei zweiten Kühlmittelabflüssen in zwei verschiedenen Eckregionen ausgestaltet sein. Der zweite Kühlmittelabfluss (oder die zweiten Kühlmittelabflüsse) ist so gestaltet, dass durch ihn erheblich weniger Kühlflüssigkeit aus dem Kühlmittelraum des Kühlelements austreten kann als aus dem ersten Kühlmittelabfluss. Somit wird die Hauptströmung von Kühlmittel durch den Kühlmittelraum von dem Kühlmittelzufluss zum ersten Kühlmittelabfluss nicht erheblich gestört.

Es wird nur ein kleiner Teil des Kühlmittels aus diesem Hauptstrom abgezweigt und durch den zweiten Kühlmittelabfluss gelenkt. Diese kleinere Menge ist so gewählt, dass sie ausreicht, um die ansonsten schwach durchströmte Eckregion auf etwa gleicher Temperatur wie die mittlere Region des Flüssigkeitsraums zu halten. Es hat sich in Versuchen gezeigt, dass bei einem im wesentlichen rechteckigen Kühlmittelraum ein Kühlmittelstrom von etwa 3 bis 10%, insbesondere 4 bis 7%, durch die dritte Eckregion, also durch den zweiten Kühlmittelabfluss ausreicht, um einen in dieser Eckregion im Verhältnis zur Mittelregion des Kühlmittelraums gleichmäßigen Wärmeabtransport zu erreichen. Je nach Ausgestaltung der Kühlmittelabflüsse wird ein solcher Strom durch den zweiten Kühlmittelabfluss erreicht, wenn der Strömungsquerschnitt Q₁ des ersten Kühlmittelabflusses etwa 7 bis 25 mal so groß ist wie der Strömungsquerschnitt Q₂ des zweiten Kühlmittelabflusses an seiner engsten Stelle. Ist der erste Kühlmittelabfluss in Form von beispielsweise 20 einzelnen kleinen Kanälen ausgestaltet, so ist der zweite Kühlmittelabfluss zweckmäßigerweise in Form nur z.B. eines solchen Kanals ausgebildet. Ist der erste Kühlmittelabfluss aus beispielsweise nur einem einzigen Kanal gebildet, so beträgt sein Strömungsquerschnitt Q₁ an seiner engsten Stelle zweckmäßigerweise das 7 bis 10-fache des Strömungsquerschnitts Q₂ des als Einkanal ausgeführten zweiten Kühlmittelabflusses.

In vorteilhafter Ausgestaltung der Erfindung sind die erste und die zweite Eckregion einander im wesentlichen diagonal gegenüber angeordnet. Die erste Eckregion mit der Mündung des Kühlmittelzuflusses und die zweite Eckregion mit der Mündung des ersten und großen Kühlmittelabflusses bilden den Anfangsund Endpunkt des Kühlmittelhauptstroms durch den Kühlmittelraum des Kühlelements der Brennstoffzelle. Liegen diese beiden Eckregionen im wesentlichen diagonal gegenüber, so wird durch diesen Hauptstrom die größtmögliche Menge an Wärme aus der Brennstoffzelle in das Kühlwasser übertragen. Die von diesem Hauptstrom am wenigsten durchströmten Bereiche des Kühlmittelraums liegen in den einander gegenüberliegenden beiden anderen Eckregionen des Kühlmittelraums. In einer oder beiden dieser Eckregionen ist jedoch ein zweiter Kühlmittelabfluss angeordnet, wodurch die Kühlmittelströmung durch den Kühlmittelraum in hohem Maße vergleichmäßigt wird.

Bei einer Brennstoffzelle, die in einem Brennstoffzellenblock geodätisch im wesentlichen vertikal angeordnet betrieben wird, also so, dass die Zellenebene im wesentlichen senkrecht zur Erdoberfläche ausgerichtet ist, sammeln sich im Kühlmittelraum im Laufe des Betriebs Luftblasen an der oberen Kante des Kühlmittelraums. Bei einer für einen solchen Betrieb vorgesehenen Brennstoffzelle ist die dritte Eckregion mit dem zweiten Kühlmittelabfluss zweckmäßigerweise an der oberen Kante des Kühlmittelraums angeordnet. Bei einer solchen Anordnung können die Luftblasen durch den zweiten Kühlmittelabfluss aus dem Kühlmittelraum austreten, wodurch eine Überhitzung der Brennstoffzelle an der oberen Kante des Kühlmittelraums wirksam vermieden wird.

Die auf den Brennstoffzellenblock ausgerichtete Aufgabe wird durch einen Brennstoffzellenblock mit einer wie oben beschriebenen erfindungsgemäßen Brennstoffzelle gelöst, bei der der erste Kühlmittelabfluss in einen ersten Axialkanal des Brennstoffzellenblocks und der zweite Kühlmittelabfluss in einen zweiten Axialkanal des Brennstoffzellenblocks mündet und die beiden Axialkanäle mit einer Druckausgleichsleitung miteinander verbunden sind.

Unter einem Axialkanal wird ein Kanal verstanden, der innerhalb des sich aus einer Vielzahl von gestapelten Brennstoffzellen zusammensetzenden Brennstoffzellenblocks in Stapelrichtung der Brennstoffzellen verläuft. Er ist also in axialer Richtung des Brennstoffzellenblocks ausgerichtet. Durch einen solchen Axialkanal des Brennstoffzellenblocks wird die Kühlflüssigkeit aus dem Brennstoffzellenblock ausgetragen. Der Kühlwasserkreislauf in einer einen Brennstoffzellenblock umfassenden Brennstoffzellenanlage ist in der Regel ein offener Kreislauf, bei dem der Flüssigkeitsdruck innerhalb eines Kühlwasser abführenden Axialkanals von der geodätischen Höhe abhängig ist, bei der sich der Axialkanal oder eine daran anschließende Leitung dem atmosphärischen Druck öffnet. Das Druckverhältnis zwischen dem Flüssigkeitsdruck im ersten Axialkanal zum Flüssigkeitsdruck im zweiten Axialkanal ist somit abhängig davon, wo die beiden Axialkanäle oder eine an sie angeschlossene Leitung ins Freie münden. Da der Durchfluss von Kühlflüssigkeit durch einen Kühlmittelabfluss abhängig ist vom Druck innerhalb des Axialkanals, in den die Kühlflüssigkeit mündet, ist es wünschenswert, dass der Flüssigkeitsdruck innerhalb des ersten Axialkanals in einem festen Verhältnis zum Flüssigkeitsdruck innerhalb des zweiten Axialkanals steht. Denn nur so kann gewährleistet werden, dass der Flüssigkeitsstrom durch den ersten Kühlmittelabfluss in einem vorher bestimmbaren Verhältnis steht zu dem Kühlmittelstrom durch den zweiten Kühlmittelabfluss. Dieses Verhältnis wäre somit unabhängig von der Kühlmittelführung aus dem Brennstoffzellenblock heraus in die Brennstoffzellenanlage. Durch eine Druckausgleichsleitung zwischen den beiden Axialkanälen herrscht in den beiden Axialkanälen immer im wesentlichen der gleiche Druck. Hierdurch ist das Strömungsverhältnis durch die beiden Flüssigkeitsabflüsse immer fest definiert und unabhängig vom Ausgang der Axialkanäle ins Freie. Es wird somit ein gleichmäßiger Wärmeabtransport aus der Brennstoffzelle in das Kühlmittel und somit eine gleichmäßige Temperatur innerhalb der Brennstoffzelle erreicht.

Die Druckausgleichsleitung kann in Form einer Leitung ausgestaltet sein, sie kann aber auch ebenso gut durch einen Kanal innerhalb des Brennstoffzellenblocks gebildet werden, der die beiden Axialkanäle miteinander verbindet. Ein solcher Kanal kann beispielsweise innerhalb der End- oder Anschlussplatte des Brennstoffzellenblocks oder innerhalb einer Zwischenplatte zwischen dem Brennstoffzellenblock und einem an diesen angrenzenden Befeuchter angeordnet sein.

Ausführungsbeispiele der Erfindung werden anhand von zwei Figuren näher erläutert. Dabei zeigen:
- FIG 1: einen Schnitt durch ein Kühlelement einer planaren und rechteckigen Brennstoffzelle;
- FIG 2: eine Explosionszeichnung eines Brennstoffzellenblocks in schematischer Darstellung.

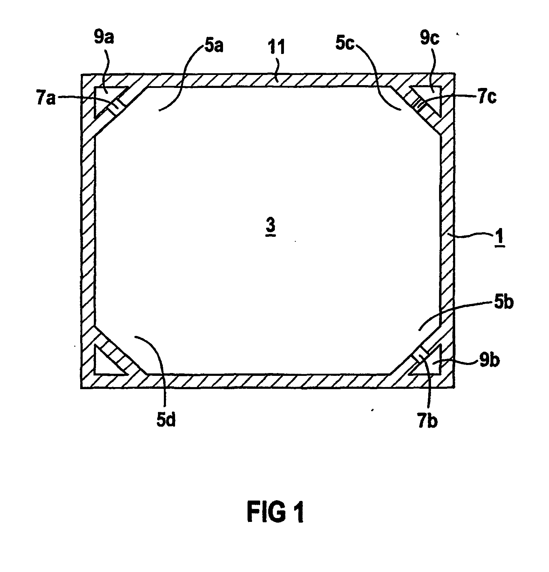

Figur 1 stellt einen Schnitt durch ein Kühlelement 1 einer planaren und rechteckigen Brennstoffzelle dar, wobei die Brennstoffzelle neben dem Kühlelement 1 eine in Figur 1 nicht gezeigte Membran-Elektroden-Einheit umfasst, die aus der Sicht von Figur 1 unterhalb des Kühlelements 1 angeordnet ist. Das Kühlelement 1 umfasst einen Kühlmittelraum 3 und vier Eckregionen 5a, 5b, 5c, 5d. In einer ersten Eckregion 5a ist die Mündung eines Kühlmittelzuflusses 7a angeordnet, wobei der Kühlmittelzufluss 7a den Kühlmittelraum 3 mit einem Axialkanal 9a verbindet. In eine zweite Eckregion 5b mündet ein erster Kühlmittelabfluss 7b, der den Kühlmittelraum 3 mit einem ersten Axialkanal 9b verbindet. In einer dritten Eckregion 5c des Kühlmittelraums 3 befindet sich die Mündung eines zweiten Kühlmittelabflusses 7c, der den Kühlmittelraum 3 mit einem zweiten Axialkanal 9c verbindet. Der Kühlmittelraum 3 weist eine vierte Eckregion 5d auf, in die jedoch weder ein Kühlmittelzufluss noch ein Kühlmittelabfluss mündet.

Die Brennstoffzelle und mit ihr das Kühlelement 1 sind in der Papierebene von Figur 1 planar. Die Axialkanäle 9a, 9b und 9c verlaufen senkrecht zur Ebene der Brennstoffzelle, also senkrecht zur Papierebene. Während des Betriebs der Brennstoffzelle strömt Kühlflüssigkeit, beispielsweise Wasser, aus einer der Brennstoffzelle zugeordneten Versorgungseinrichtung durch den Axialkanal 9a zum Kühlelement 1 der Brennstoffzelle. Es durchströmt den Kühlmittelzufluss 7a und gelangt in die erste Eckregion 5a. Der größte Teil des Kühlwassers durchströmt den Kühlmittelraum 3, durchströmt die zweite Eckregion 5b und anschließend den ersten Kühlmittelabfluss 7b und gelangt zum ersten Axialkanal 9b, durch den es aus der Brennstoffzelle abgeleitet wird. Ein kleiner Teil des durch den Kühlmittelzufluss 7a in den Kühlmittelraum 3 gelangenden Kühlwassers strömt entlang der oberen Kante 11 des Kühlmittelraums 3 und gelangt in die dritte Eckregion 5c. Von dort durchströmt es den zweiten Kühlmittelabfluss 7c, gelangt in den zweiten Axialkanal 9c und wird durch diesen ebenfalls aus der Brennstoffzelle abgeleitet. Sich im Kühlmittelraum 3 des Kühlelements 1 ansammelnde Luftblasen werden durch die Wirkung der Gravitation an die obere Kante 11 des Kühlmittelraums 3 getrieben. Diese Luft wird vom Kühlwasser weitgehend durch den zweiten Kühlmittelabfluss 2 aus dem Kühlmittelraum 3 heraus und in den zweiten Axialkanal 9c hineingetrieben, von wo sie aus der Brennstoffzelle herausgeschwemmt wird.

Durch die Anordnung des zweiten Kühlmittelabflusses 7c in der Eckregion 5c wird ein Abtransport des sich entlang der oberen Kante 11 sammelnden warmen Wassers gewährleistet. Hierdurch wird erreicht, dass sich in der Brennstoffzelle entwickelnde Reaktionswärme regional gleichmäßig an das Kühlwasser innerhalb des Kühlelements 1 abgegeben wird. Eine regionale Überhitzung der Brennstoffzelle wird somit wirksam vermieden.

Die Brennstoffzelle und mit ihr das Kühlelement 1 sind dazu ausgelegt, in einem Brennstoffzellenblock in der Weise angeordnet betrieben zu werden, dass die obere Kante 11 des Kühlmittelraums 3 aus Sicht der Gravitation oben angeordnet ist. Hierdurch bedingt ist es möglich, in der Eckregion 5d auf einen weiteren Kühlmittelabfluss oder -zufluss zu verzichten. Sich in der unteren Hälfte des Kühlmittelraums 3 anwärmendes Kühlwasser wird durch Konvektion nach oben und somit auch aus der Eckregion 5d heraus getrieben, wodurch die Eckregion 5d kontinuierlich von kühlem Kühlwasser durchströmt wird. Ein dritter Kühlmittelabfluss oder ein zweiter Kühlmittelzufluss in der Eckregion 5d ist somit nicht zwingend notwendig.

Die Kühlmittelabflüsse 7b und 7c sind jeweils als ein einziger Kanal rechteckigen Querschnitts ausgestaltet. Der Strömungsquerschnitt Q₁ des ersten Kühlmittelabflusses 7b weist die siebenfache Querschnittsfläche gegenüber dem Strömungsquerschnitt Q₂ des zweiten Kühlmittelabflusses 7c auf. Bedingt durch die Geometrie der Kühlmittelabflüsse 7b und 7c strömt etwa 7% des durch den Kühlmittelzufluss 7a in den Kühlmittelraum 3 eintretenden Kühlwassers durch den zweiten Kühlmittelabfluss 7c ab.

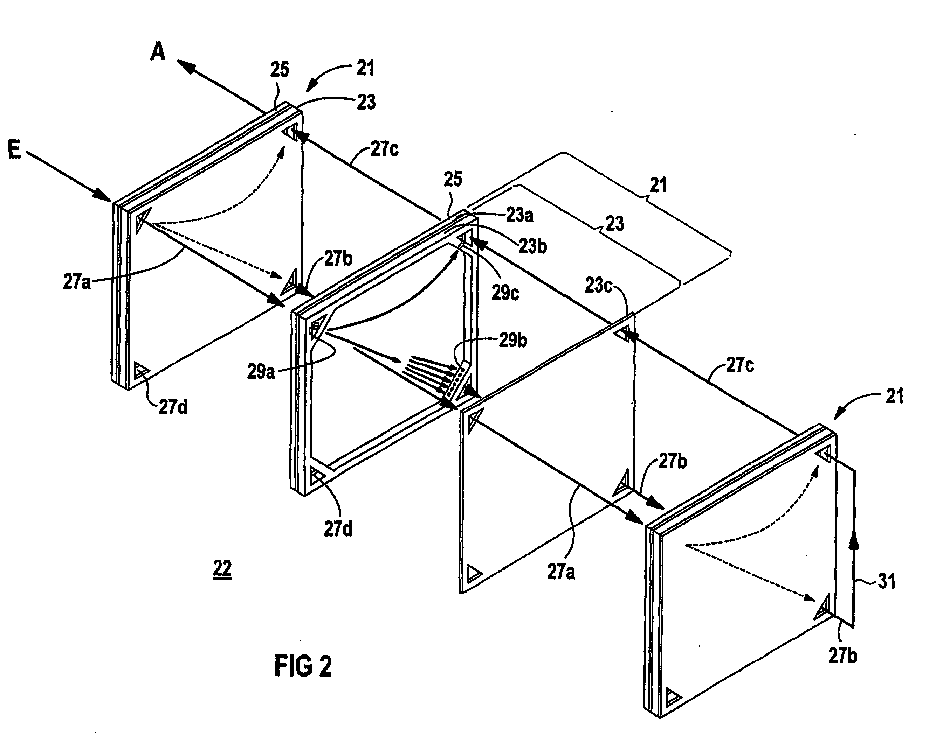

In Figur 2 werden in Form einer Explosionszeichnung schematisch drei Brennstoffzellen 21 eines Brennstoffzellenblocks 22 dargestellt. Jede dieser Brennstoffzellen 21 umfasst ein Kühlelement 23 und eine Membran-Elektrolyt-Einheit 25. Das Kühlelement 23 umfasst einen Rahmen 23b, an den beidseitig jeweils eine Platte 23a und 23c angrenzt. Der Rahmen 23b bildet somit mit den beiden Platten 23a, 23c einen Hohlraum, den Kühlmittelraum.

Jede der Brennstoffzellen 21 weist in den Ecken jeweils eine dreieckige Aussparung auf. Diese Aussparungen bilden bei aneinander gelegten Brennstoffzellen vertikal zur Zellenebene verlaufende Axialkanäle 27a, 27b, 27c und 27d bilden. Während des Betriebs des Brennstoffzellenblocks 22 strömt Kühlwasser von einer in Figur 2 nicht näher gezeigten Versorgungseinrichtung für den Brennstoffzellenblock 22 in den Eingang E des Axialkanals 27a des Brennstoffzellenblocks 22. Durch den Axialkanal 27a wird das Kühlwasser zu den Kühlelementen 23 des Brennstoffzellenblocks 22 geleitet. Jeweils ein Teil des Kühlwassers strömt durch den Kühlmittelzufluss 29a eines jeden Kühlelemente 23 in den Kühlmittelraum des Kühlelements 23. Der größte Teil des Kühlwassers durchströmt den Kühlmittelraum diagonal und erreicht den ersten Kühlmittelabfluss 29b, den es durchströmt und den ersten Axialkanal 27b erreicht. In dem ersten Axialkanal 27b sammelt sich dieses Kühlwasser aus den Kühlelementen 23 der Brennstoffzellen 21 des Brennstoffzellenblocks 22 und wird über die Druckausgleichsleitung 31, die als eine Leitung außerhalb des Brennstoffzellenblocks 22 ausgeführt ist, in den zweiten Axialkanal 27c geleitet, in dem es den Brennstoffzellenblock 22 durchströmt und ihn durch den Ausgang A des zweiten Axialkanals 27c verlässt. Ein kleiner Teil des Kühlwassers strömt vom Kühlmittelzufluss 29a eines jeden Kühlelements 23 zum zweiten Kühlmittelabfluss 29c, durch den es zum zweiten Axial kanal 27c geleitet wird. Dort verbindet es sich mit dem aus dem ersten Axialkanal 27b stammenden Kühlwasser und strömt zum Ausgang A des zweiten Axialkanals 27c.

Der erste Kühlmittelabfluss 29b eines jeden Kühlmittelraums wird aus 20 kleinen Kanälen gebildet, von denen in Figur 2 nur einige gezeigt sind. Die Kanäle verbinden den Kühlmittelraum mit dem Axialkanal 27b. Der zweite Kühlmittelabfluss 29c eines jeden Kühlmittelraums wird durch einen einzigen Kanal gebildet, der den Kühlmittelraum mit dem zweiten Axialkanal 27c verbindet. Die Geometrie der Kanäle ist jeweils gleich, so dass der sich aus 20 Kanalquerschnitten zusammensetzende Strömungsquerschnitt Q₁ des ersten Kühlmittelabflusses die 20-fache Fläche aufweist wie der sich aus nur einem Kanalquerschnitt zusammensetzende Strömungsquerschnitt Q₂ des zweiten Kühlmittelabflusses 29c. Durch die Druckausgleichsleitung 31 ist gewährleistet, dass der Flüssigkeitsdruck innerhalb der Axialkanäle 27b und 27c im wesentlichen gleich ist. Die Druckverhältnisse innerhalb der Axialkanäle 27b und 27c begünstigen somit keine der Strömungen vom Kühlmittelzufluss 29a zu den Kühlmittelabflüssen 29b und 29c. Die durch die Kühlmittelabflüsse 29b und 29c abströmenden Kühlmittelmengen werden somit maßgeblich von den Strömungsquerschnitten-Q₁ und Q₂ bestimmt, so dass etwa 5 % des den Kühlmittelraum durchströmenden Kühlwassers durch den zweiten Kühlmittelabfluss 29c den Kühlmittelraum verlässt.

## Patentansprüche

1. Planare und im wesentlichen rechteckige Brennstoffzelle (21) mit einem Kühlelement (1, 23), das einen im wesentlichen rechteckigen Kühlmittelraum (3) mit vier Eckregionen (5a, 5b, 5c, 5d) aufweist, wobei in einer ersten Eckregion (5a) die Mündung eines Kühlmittelzuflusses (7a, 29a) und in einer zweiten Eckregion (5b) die Mündung eines Kühlmittelabflusses (7b, 29b) angeordnet ist,
**gekennzeichnet durch** einen zweiten Kühlmittelabfluss (7c, 29c) in einer dritten Eckregion (5c) des Kühlmittelraums (3), wobei der erste Kühlmittelabfluss (7b, 29b) an seiner engsten Stelle einen Strömungsquerschnitt Q₁ und der zweite Kühlmittelabfluss (7c, 29c) an seiner engsten Stelle einen Strömungsquerschnitt Q₂ aufweist und das Verhältnis Q₁/Q₂ 7 bis 25 beträgt.

2. Brennstoffzelle (21) nach Anspruch 1, **dadurch gekennzeichnet, dass** die erste (5a) und die zweite Eckregion (5b) einander im wesentlichen diagonal gegenüber angeordnet sind.

3. Brennstoffzellenblock (22) mit einer Brennstoffzelle (21) nach Anspruch 1 oder 2, bei der der erste Kühlmittelabfluss (7b, 29b) in einen ersten Axialkanal (27b) des Brennstoffzellenblocks (22) und der zweite Kühlmittelabfluss (7c, 29c) in einen zweiten Axialkanal (27c) des Brennstoffzellenblocks (22) mündet und die beiden Axialkanäle (27b, 27c) mit einer Druckausgleichsleitung (31) miteinander verbunden sind.

## Claims

1. Planar and essentially rectangular fuel cell (21) having a cooling element (1, 23) which has an essentially rectangular coolant space (3) with four corner regions (5a, 5b, 5c, 5d), the mouth of a coolant inflow (7a, 29a) being arranged in a first corner region (5a), and the mouth of a coolant outflow (7b, 29b) being arranged in a second corner region (5b), **characterized by** a second coolant outflow (7c, 29c) in a third corner region (5c) of the coolant space (3), the first coolant outflow (7b, 29b) having a flow cross section Q₁ at its narrowest point, and the second coolant outflow (7c, 29c) having a flow cross section Q₂ at its narrowest point, and the ratio Q₁/Q₂ being 7 to 25.

2. Fuel cell (21) according to Claim 1, **characterized in that** the first corner region (5a) and the second corner region (5b) are arranged essentially diagonally opposite one another.

3. Fuel cell block (22) having a fuel cell (21) according to Claim 1 or 2, in which the first coolant outflow (7b, 29b) opens into a first axial duct (27b) of the fuel cell block (22), and the second coolant outflow (7c, 29c) opens into a second axial duct (27c) of the fuel cell block (22), and the two axial ducts (27b, 27c) are connected to one another using a pressure equalizing line (31).

## Revendications

1. Pile (21) à combustible, plane et sensiblement rectangulaire, comprenant un élément (1, 23) de refroidissement, qui a une chambre (3) sensiblement rectangulaire et ayant quatre régions (5a, 5b, 5c, 5d) de sommet pour du fluide de refroidissement, l'embouchure d'une admission (7a, 29a) de fluide de refroidissement étant disposée dans une première région (5a) de sommet et l'embouchure d'une évacuation (7b, 29b) du fluide de refroidissement étant disposée dans une deuxième région (5b) de sommet,
**caractérisée par** une deuxième évacuation (7c, 29c) du fluide de refroidissement dans une troisième région (5c) de sommet de la chambre (3) pour du fluide de refroidissement, la première évacuation (7b, 29b) du fluide de refroidissement ayant à son point le plus étroit une section Q₁ transversale d'écoulement et la deuxième évacuation (7c, 29c) pour du fluide de refroidissement ayant en son point le plus étroit une section Q₂ transversale d'écoulement et le rapport Q₁/Q₂ va de 7 à 25.

2. Pile (21) à combustible suivant la revendication 1, **caractérisée en ce que** la première région (5a) de sommet et la deuxième région (5b) de sommet sont disposées sensiblement en diagonal l'une par rapport à l'autre.

3. Bloc (22) de piles à combustible ayant une pile (21) à combustible suivant la revendication 1 ou 2, dans lequel la première évacuation (7b, 29b) du fluide de refroidissement débouche dans un premier canal (27b) axial du bloc (22) de piles à combustible et la deuxième évacuation (7c, 29c) du fluide de refroidissement dans un deuxième canal (27c) axial du bloc (22) de pile à combustible et les deux canaux (27b, 27c) axiaux communiquent l'un avec l'autre par un conduit (31) de compensation de la pression.
